Europäisches Patentamt

(19) European Patent Office

Office européen des brevets

(11) Numéro de publication : **0 155 497**
**B1**

(12) FASCICULE DE BREVET EUROPÉEN

(45) Date de publication du fascicule du brevet :
02.12.87

(21) Numéro de dépôt : 85101555.2

(22) Date de dépôt : 13.02.85

(51) Int. Cl.⁴ : **F 16 H  1/32**, F 16 H 29/12,
F 16 H 25/06

(54) **Réducteur mécanique.**

(30) Priorité : 02.03.84 CH 1039/84

(43) Date de publication de la demande :
25.09.85 Bulletin 85/39

(45) Mention de la délivrance du brevet :
02.12.87 Bulletin 87/49

(84) Etats contractants désignés :
AT BE CH DE FR GB IT LI LU NL SE

(56) Documents cités :
CH-A-  142 829
DE-C-  312 164
US-A- 2 884 815

(73) Titulaire : REDUTO S.A.
c/o Me. Wolhauser Place de Notre Dame 162
CH-1700 Fribourg (CH)

(72) Inventeur : Bajulaz, Roger
22, chemin William Barbey
CH-1292 Chambesy (CH)

(74) Mandataire : Micheli, Michel-Pierre et al
MICHELI & CIE 118, Rue du Rhône Case Postale 47
CH-1211 Genève 6 (CH)

## Description

La présente invention a pour objet un réducteur mécanique du type présentant un axe moteur et un organe entraîné coaxiaux, tournant à des vitesses angulaires différentes fonction du rapport de réduction du réducteur et comprenant un premier et un second organes réducteurs coaxiaux déplaçables angulairement l'un par rapport à l'autre, comportant chacun une série d'éléments d'entraînement uniformément répartis autour du centre de rotation de l'organe réducteur correspondant, conformément au préambule de la revendication 1.

Il existe de tels réducteurs mécaniques, tels les réducteurs « Cyclo » ou « Gleitkeilgetriebe » qui toutefois ne donnent pas entièrement satisfaction dans toutes les applications notamment lorsqu'il est nécessaire de réaliser des réducteurs sans jeu.

En effet dans le type de réducteur « Cyclo » (par exemple CH-A-142 829) la réduction est obtenue par un disque-came entraîné par un excentrique, ce disque-came présentant à sa périphérie un nombre de courbures cycloïdales inférieur d'une unité au nombre de rouleaux pivotés sur une douille extérieure fixe, avec lesquels cette périphérie entre en contact. La transmission de la rotation du disque-came à l'organe entraîné s'effectue par l'intermédiaire de galets pivotés sur un plateau et coopérant avec des perçages de plus grand diamètre du disque-came répartis uniformément autour de son centre.

Un tel réducteur nécessite des usinages compliqués, notamment pour la réalisation de la surface périphérique du disque-came, et un grand nombre de points de contact entre le disque-came et la douille fixe. Ce type de réducteur ne permet pas d'obtenir de nombreux rapports de réduction différents. En outre, avec un seul étage, il n'est pas possible de réaliser des rapports de réduction élevés sans nécessiter un réducteur de grande dimension.

Dans le type de réducteur « Gleitkeilgetriebe » un disque denté à sa périphérie est entraîné par un excentrique de telle sorte que sa denture engrène avec les dentures d'une couronne dentée fixe et d'une couronne dentée mobile. Le nombre de dents de ces deux couronnes dentées est différent de sorte que l'introduction d'une dent du disque entre les dents adjacentes des deux couronnes provoque un déplacement angulaire relatif de ces couronnes.

L'inconvénient de ce type de réducteur est le relativement grand encombrement et surtout le mouvement de glissement que les dents du disque effectuent sur les flancs des dents des couronnes.

Il existe enfin des réducteurs à engrenage qui même en utilisant un pignon satellite sont encombrants et ne permettent pas de réaliser des rapports de réduction entiers ce qui notamment dans la robotique est très important.

La présente invention a pour but la réalisation d'un réducteur mécanique présentant un faible encombrement, une définition angulaire précise entre les arbres d'entrée et de sortie, permettant la réalisation de nombreux rapports de réduction entiers avec un seul étage et dont la fabrication ne fasse intervenir que des usinages simples pouvant être réalisés avec une grande précision.

Le présent réducteur permet également de limiter les points en contact effectuant des mouvements relatifs pour limiter l'usure et les pertes par frottement.

Le réducteur mécanique selon l'invention se distingue par les caractéristiques énumérées à partie caractérisante de la revendication 1.

Le dessin annexé illustre schématiquement et à titre d'exemple plusieurs formes d'exécution du réducteur selon l'invention.

La figure 1 est une coupe axiale d'une première forme d'exécution du réducteur.

La figure 2 est une vue de A du réducteur illustré à la figure 1, le boîtier étant retiré.

Les figures 3 à 9 illustrent les sept pas successifs nécessaires pour provoquer la rotation de 1/11 de tour de l'organe de réduction entraîné interne par rapport à l'organe de réduction d'appui externe.

Les figures 10 à 20 illustrent les onze pas nécessaires pour provoquer la rotation de 1/7 de tour de l'organe de réduction entraîné externe par rapport à l'organe de réduction d'appui interne.

La figure 21 illustre graphiquement le pivotement instantané du rotor du réducteur.

La figure 22 illustre une troisième forme d'exécution du réducteur présentant un rotor à quatre branches.

La figure 23 illustre une variante du réducteur illustré à la figure 22.

La figure 24 est une vue en coupe axiale d'une quatrième forme d'exécution du réducteur présentant deux rotors.

La figure 25 est une vue de B du réducteur illustré à la figure 24, le boîtier étant enlevé.

La figure 26 est une coupe axiale partielle d'une cinquième forme d'exécution du réducteur.

La figure 27 est une coupe axiale d'une sixième forme d'exécution du réducteur.

La figure 28 est une vue de côté du réducteur illustré à la figure 27, le flasque 51 et la couronne 62 étant enlevés et les organes réducteurs coupés partiellement dans le plan médian du premier rotor et partiellement dans le plan médian du second rotor.

La figure 29 illustre un détail à plus grande échelle des éléments d'entraînement et des organes d'actionnement de cette dernière forme d'exécution.

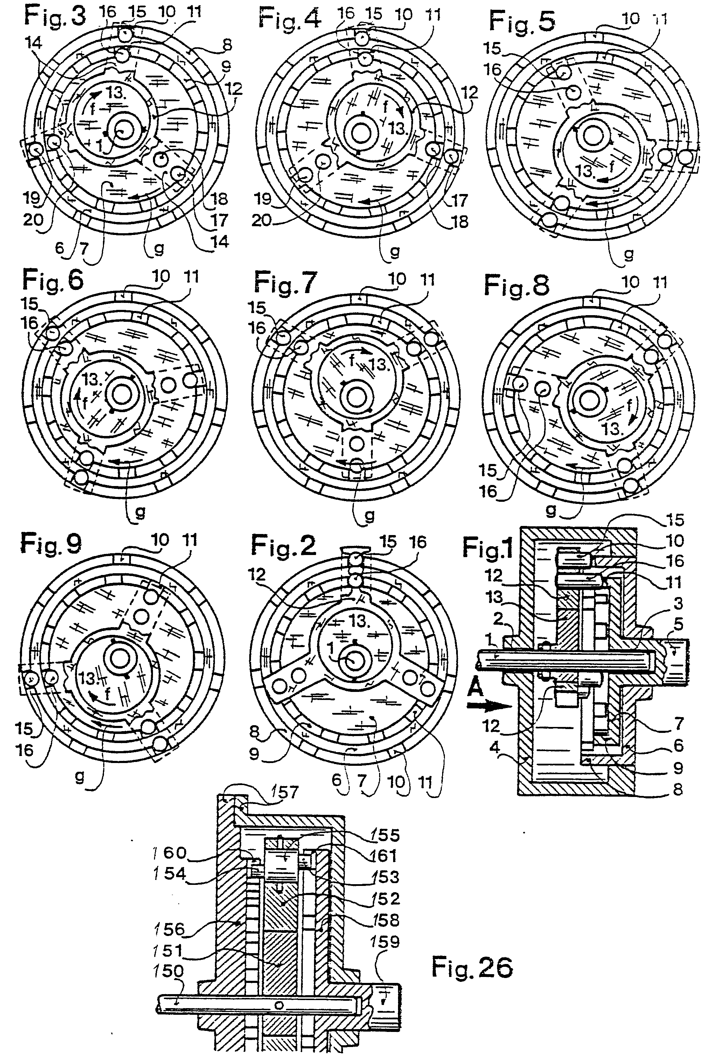

La première forme d'exécution du réducteur illustré aux figures 1 à 9 comporte un axe moteur 1 pivoté dans deux paliers 2, 3 dont l'un est pratiqué dans un boîtier 4 du réducteur et l'autre dans un moyeu que comporte l'arbre de sortie 5. L'arbre moteur 1 et l'arbre de sortie 5 sont coaxiaux et tournent à des vitesses angulaires dépendant du rapport de réduction du réducteur mécanique.

Ce réducteur mécanique comporte encore un organe de réduction d'appui 6 et un organe de réduction entraîné 7 coaxiaux entre eux et par rapport à l'arbre moteur 1.

Dans l'exemple illustré l'organe de réduction d'appui 6 est fixe, solidaire du boîtier 4, tandis que l'organe de réduction entraîné 7 est solidaire de l'arbre de sortie 5.

Chacun des organes de réduction 6, 7 comporte une couronne annulaire 8 respectivement 9 concentriques et de diamètres différents.

Chacune des couronnes 8, 9 comporte une série d'éléments d'entraînement, constitués ici par des encoches 10, respectivement 11, uniformément réparties autour du centre de rotation de l'organe réducteur correspondant 6, 7.

Dans cette forme d'exécution particulière, l'organe réducteur entraîné 7, soit la couronne interne 9, comporte onze encoches 11, tandis que l'organe réducteur d'appui 6, soit la couronne externe 8, comporte sept encoches 10.

Le réducteur comporte encore un rotor excentré 12 entraîné dans ses mouvements par un excentrique 13 solidaire de l'arbre moteur 1. Ce rotor excentré 12 comporte trois bras 14 radiaux, symétriquement disposés par rapport au centre du rotor, portant chacun deux goupilles 15, 16 ; 17, 18 et 19, 20 constituant des paires d'organes d'actionnement. Lors des déplacements du rotor, les organes d'actionnement 15, 17 et 19 coopèrent avec les encoches 10 de l'organe réducteur d'appui 6, tandis que les organes d'actionnement 16, 18 et 20 coopèrent avec les encoches 11 de l'organe réducteur entraîné 7.

Lors des mouvements du rotor 12, les paires d'organes d'actionnement 15, 16 ; 17, 18 ; 19, 20 coopèrent successivement avec toutes les encoches 10, 11 des organes réducteurs 6, 7. Toutefois, deux paires au plus d'organes d'actionnement sont simultanément en prise avec les encoches 10, 11, la troisième paire étant libre.

Dans sa position illustrée à la figure 3, l'excentrique 13 est entraîné dans le sens de la flèche f, la paire d'organes d'actionnement 15, 16 pénètre juste dans une encoche 10, respectivement 11 des organes réducteurs 6, 7, tandis que la paire d'organes d'actionnement 19, 20 quitte juste une encoche 10, respectivement 11 et la paire d'organes d'actionnement 17, 18 est dégagée de toute encoche 10, 11.

Lorsque le rotor 12 passe de sa position illustrée à la figure 3 jusque dans sa position illustrée à la figure 4, entraîné par l'arbre moteur 1, il effectue en fait un pivotement instantané autour de l'organe d'actionnement 15 prisonnier de l'encoche 10, de l'organe réducteur d'appui 6 qui est donc fixe angulairement, dans laquelle il se trouve. Ce pivotement instantané provoque un entraînement en rotation de l'encoche 11 de l'organe réducteur entraîné en prise avec l'organe d'actionnement 16 dans le sens de la flèche g. Pendant ce mouvement du rotor 12, la paire d'organes d'actionnement 19, 20 a été dégagée des encoches 10, 11 et à la fin dudit mouvement ou pas du rotor 12 la paire d'organes d'actionnement 17, 18 entre dans des encoches 10, respectivement 11 au moment où les organes d'actionnement 15, 16 quittent les encoches 10, 11 avec lesquelles ils coopéraient.

Pendant ce mouvement unitaire ou pas du rotor, le déplacement angulaire de l'organe réducteur entraîné 7 est dans cet exemple de 1/77 de tour.

Il faut deux tours de l'arbre moteur 1 pour qu'un des bras 14 du rotor 12 revienne dans la position illustrée à la figure 3.

En sept pas successifs l'organe réducteur entraîné 7 a effectué 1/11 de tour comme on peut le voir par la position des encoches correspondantes 10, 11 sur les figures 3 et 9.

L'amplitude de la rotation pour chaque pas du rotor 12 de l'organe réducteur interne 7 est dépendante de la distance séparant les axes des organes d'actionnement d'une même paire et de l'amplitude angulaire du pivotement instantané du rotor autour de l'organe d'actionnement en prise avec l'encoche 10 correspondante.

Il va de soi qu'il n'est pas possible de choisir arbitrairement le nombre d'encoches 10 et 11 ainsi que le nombre de paires d'organes d'actionnement car il faut qu'à des moments bien précis du mouvement des encoches 10, 11 soient alignées pour qu'une paire d'organes d'actionnement puisse y pénétrer.

Ce nombre d'encoches 10, 11 des organes réducteurs 6, 7 est donné par la formule suivante :

$$N_1 = \frac{a \cdot N_2 - n}{N_2 \cdot in} + b \cdot N_2$$

dans laquelle :

$N_1$ est le nombre d'encoches 10 de l'organe réducteur d'appui, ici l'organe réducteur externe 6.

a est un nombre entier supérieur ou égal à 1.

n est un nombre entier supérieur ou égal à 1.

b est un nombre entier supérieur ou égal à 0.

$N_2$ est le nombre d'éléments d'entraînement 11 de l'organe réducteur entraîné, ici l'organe réducteur interne 7.

$N_2 \cdot in$ est le nombre d'éléments d'entraînement de l'organe réducteur entraîné, ici l'organe réducteur 7, situés entre deux organes d'actionnement 16, 18, 20 appartenant à des paires différentes en

**0 155 497**

prises avec cet organe réducteur entraîné 7.

Dans le cas décrit ci-dessus, on voit, si $N_2 = 11$ ; $N_2 \cdot in = 3$ ; $a = 2$ ; $n = 1$ et $b = 0$ que :

$$N_1 = \frac{2 \cdot 11 - 1}{3} = 7$$

et le rapport de réduction :

$$R = 2 \cdot 11 = 22 \text{ si } N_1 \cdot in = 2$$

ce qui est bien conforme à la forme d'exécution illustrée où l'organe réducteur entraîné 7 comporte onze encoches 11 et l'organe réducteur d'appui 6 comporte sept encoches 10.

Il est également possible d'exprimer le nombre d'éléments d'entraînement de l'organe réducteur entraîné en fonction du nombre d'éléments d'entraînement de l'organe réducteur d'appui comme suit :

$$N_2 = \frac{c \cdot N_1 + n}{N_1 in} + d \cdot N_1$$

où c et d sont des nombres entiers.

Dans le cas de la première forme d'exécution décrite on a :

$$c = 1 ; \quad n = 1 ; \quad d = 1 ; \quad N_1 = 7$$

$N_1 in = 2$ soit

$$N_2 = \frac{7 + 1}{2} + 7 = 11$$

ce qui correspond bien à la forme d'exécution illustrée aux figures 3 à 9.

On a vu que dans cette première forme d'exécution, il a fallu deux révolutions complètes de l'arbre moteur 1 pour provoquer un déplacement angulaire de l'organe réducteur entraîné 7 de 1/11 de tour. L'organe réducteur 7 étant ici solidaire de l'arbre de sortie 5 le rapport de réduction de ce réducteur est donc R = 22.

Ce rapport de réduction peut s'exprimer de façon générale par la formule :

$$R = \frac{N_1 in \cdot N_2}{n} ,$$

où $N_1 in$ est le nombre d'éléments d'entraînement de l'organe réducteur d'appui 6 situés entre deux organes d'actionnement appartenant à des paires différentes en prise avec cet organe réducteur, soit ici 2, $N_2$ est le nombre d'éléments d'entraînement de l'organe réducteur entraîné 7, soit ici 11, et n un nombre entier, ici 1.

Dans le cas illustré le rapport de réduction est égal à :

$$R = \frac{2 \cdot 11}{1} = 22$$

En modifiant le nombre d'éléments d'entraînement des organes réducteurs 6, 7 ainsi que le nombre d'élément d'entraînement de l'organe réducteur d'appui compris entre deux paires d'organes d'actionnement du rotor, il est possible de réaliser un très grand nombre de rapports différents.

Ceci est d'autant plus vrai qu'il est encore possible de faire varier le nombre n. Ainsi si l'on se donne les valeurs suivantes :

$$N_2 = 15 ; \quad N_2 in = 4 ; \quad N_1 in = 5$$
$$a = 1 ; \quad n = 3 ; \text{ et } b = 1$$

alors on a :

$$N_1 = \frac{1 \cdot 15 - 3}{4} + 1 \cdot 15 = 18$$

4

et le rapport de réduction est de :

$$R = \frac{5 \cdot 15}{3} = 25$$

A titre d'exemple non limitatif, on peut citer les valeurs suivantes qui répondent toutes aux formules I et la données précédemment :

Tableau I

| $N_1$ | $N_2$ | $N_1 in$ | $R= \dfrac{N_2 \cdot N_1 in}{n}$ | $N_2 \cdot in$ | n |
|---|---|---|---|---|---|
| 7 | 11 | 2 | 22 | 3 | 1 |
| 18 | 11 | 5 | 55 | 3 | 1 |
| 29 | 11 | 8 | 88 | 3 | 1 |
| 4 | 17 | 1 | 17 | 4 | 1 |
| 21 | 17 | 5 | 85 | 4 | 1 |
| 38 | 17 | 7 | 153 | 4 | 1 |
| 11 | 15 | 3 | 45 | 4 | 1 |
| 26 | 15 | 7 | 105 | 4 | 1 |
| 41 | 15 | 11 | 165 | 4 | 1 |
| 18 | 15 | 5 | 25 | 4 | 3 |

Il va de soi que toutes les combinaisons de valeurs arbitraires pour les facteurs a, b, c, d et n ne peuvent pas conduire à des réalisations constructibles il faut encore satisfaire à la condition que les nombres d'éléments d'entraînement $N_1$ et $N_2$ ainsi que les nombres correspondants $N_1 \cdot in$ et $N_2 \cdot in$ soient des nombres entiers. Néanmoins comme on le voit au tableau I qui n'est de loin pas exhaustif de très nombreuses exécutions sont possibles conduisant à une multitude de rapports de réduction différents.

Dans cette forme d'exécution où l'organe réducteur d'appui 6 est extérieur à l'organe réducteur entraîné 7, l'arbre moteur 1 et l'organe réducteur entraîné 7 tournent dans le même sens. Le rotor 12 tourne en sens inverse.

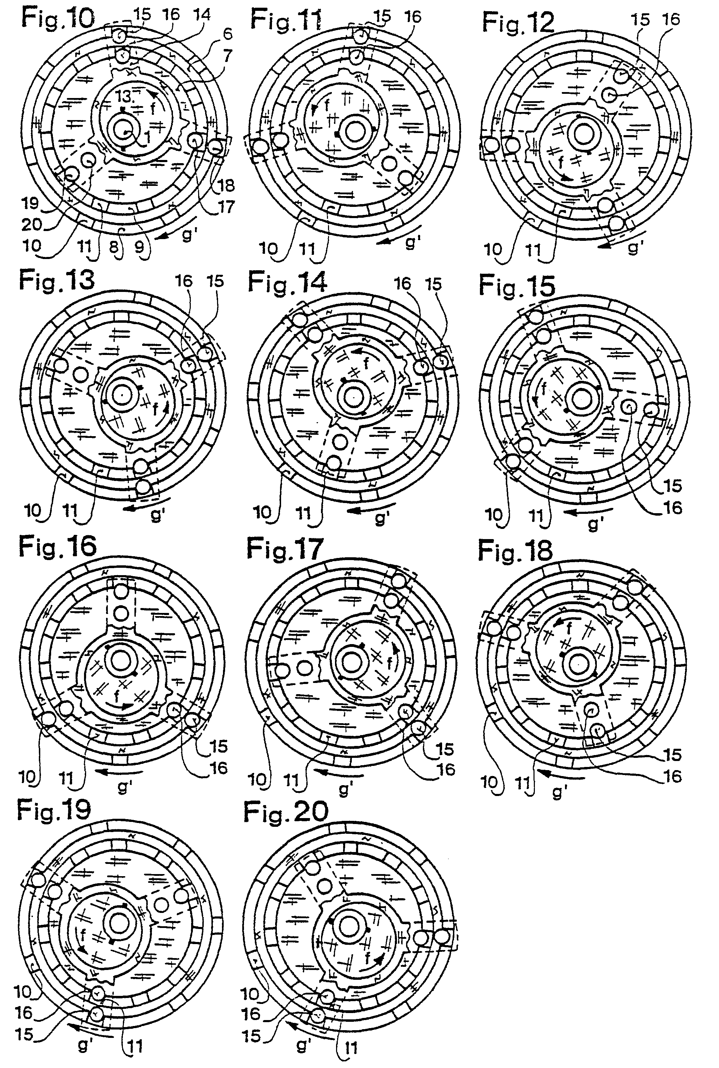

La seconde forme d'exécution du réducteur mécanique illustrée aux figures 10 à 20 comporte un arbre moteur 1 entraînant un rotor 12, identique au rotor 12 de la première forme d'exécution comportant des paires d'organes d'actionnement 15, 16 ; 17, 18 ; 19, 20, coopérant, comme dans la première forme d'exécution avec des éléments d'entraînement sous forme d'encoches 10, 11 portées par des organes réducteurs 6, 7 respectivement. Comme dans la première forme d'exécution, l'organe réducteur externe comporte sept encoches 10, tandis que l'organe réducteur interne comporte onze encoches 11.

La seule différence de cette forme d'exécution d'avec la première réside dans le fait que l'organe réducteur d'appui, fixe angulairement, est ici l'organe réducteur interne 7 et que l'organe réducteur entraîné est l'organe réducteur externe 6. De plus, l'arbre moteur 1 et l'excentrique 13 tournent en sens inverse de l'organe réducteur entraîné 6. Le rotor 12 tourne dans le même sens que l'organe réducteur entraîné 6.

Dans ce cas, où les sens de rotation entre l'excentrique 13 et l'organe réducteur entraîné 6 sont inversés la formule permettant la détermination du nombre d'éléments d'entraînement des organes réducteurs est :

$$N_1 = \frac{e \cdot N_2 + n}{N_2 \cdot in} + f \cdot N_2 \qquad (II)$$

où

e est un nombre entier supérieur ou égal à 1

n est un nombre entier supérieur ou égal à 1

5

f est un nombre entier supérieur ou égal à 0
et où les symboles ont la même signification que précédemment.
Dans le cas de la seconde forme d'exécution on a :

$$e = 1 ; \quad n = 1 ; \quad f = 1 ; \quad N_2 in = 2 \text{ et } N_2 = 7 \text{ et donc}$$

$$N_1 = \frac{1 \cdot 7 + 1}{2} + 1 \cdot 7 = 11$$

et le rapport de réduction

$$R = N_1 \cdot in \cdot N_2 \text{ avec } N_1 in = 3 \text{ soit}$$
$$R = 3 \cdot 7 = 21$$

dans le cas précité, on voit que si f = 0 le nombre d'éléments d'entraînement $N_1$ de l'organe réducteur d'appui serait de quatre seulement.

$$N_1 = \frac{7 + 1}{2} = 4$$

dans ce cas $N_1 in$ serait égal à un et le rapport de réduction serait alors

$$R = 1 \cdot 7 = 7$$

Ici également on peut exprimer le nombre d'éléments d'entraînement de l'organe réducteur entraîné en fonction du nombre d'éléments d'entraînement de l'organe réducteur d'appui.

$$N_2 = \frac{g \cdot N_1 - n}{N_1 in} + h \cdot N_1 \tag{IIa}$$

où
g et n sont des nombres entiers supérieurs ou égal à 1, et
h est un nombre entier supérieur ou égal à 0.
Dans le cas de cette seconde forme d'exécution on a :

$$N_1 = 11 ; \quad N_1 in = 3 ; \quad g = 2 ; \quad n = 1 \text{ et } h = 0$$

et :

$$N_2 = \frac{2 \cdot 11 - 1}{3} = 7$$

ce qui correspond bien à la forme d'exécution illustrée aux figures 10 à 20.
On voit donc que pour des réducteurs dont le rotor est identique de même que le nombre d'éléments d'entraînement des organes réducteurs des rapports de réduction différents d'une unité sont obtenus suivant que l'organe réducteur d'appui est l'organe externe ou interne.
Dans cette seconde forme d'exécution il faut onze pas successifs pour réaliser un cycle du rotor et pour que l'organe réducteur entraîné ait parcouru 1/7 de tour par rapport à l'organe réducteur d'appui fixe. Comme on le voit aux figures 10 à 20 il faut trois tours de l'arbre moteur 1 pour effectuer les onze pas du rotor.
Ici également on peut donner un exemple où n serait différent de 1 comme précédemment. Ainsi si l'on se donne les valeurs suivantes :

$$N_2 = 18 ; \quad N_2 \cdot in = 5 ; \quad N_1 \cdot in = 4$$
$$e = 4 ; \quad n = 3 \text{ et } f = 0$$

alors on a :

$$N_1 = \frac{4 \cdot 18 + 3}{5} = 15 \tag{II}$$

et le rapport de réduction est :

$$R = \frac{18 \cdot 4}{3} = 24$$

Egalement dans le cas où l'organe réducteur d'appui est l'organe externe 6, on peut mentionner que de très nombreux rapports de réduction sont réalisables qui comme dans le cas précédent répondent tous à la formule II ou IIa.

Tableau II

| $N_1$ | $N_2$ | $N_1 in$ | $R = \dfrac{N_2 \cdot N_1 in}{n}$ | $N_2 in$ | $n$ |
|---|---|---|---|---|---|
| 11 | 7 | 3 | 21 | 2 | 1 |
| 11 | 18 | 3 | 54 | 5 | 1 |
| 11 | 29 | 3 | 87 | 8 | 1 |
| 17 | 4 | 4 | 16 | 1 | 1 |
| 17 | 21 | 4 | 84 | 5 | 1 |
| 17 | 38 | 4 | 152 | 7 | 1 |
| 15 | 11 | 4 | 44 | 3 | 1 |
| 15 | 26 | 4 | 104 | 7 | 1 |
| 15 | 41 | 4 | 164 | 11 | 1 |
| 15 | 18 | 4 | 24 | 5 | 3 |

Il est intéressant de constater que quelle que soit la réalisation particulière du réducteur avec un des deux organes réducteurs fixes, le rapport de réduction est toujours un nombre entier.

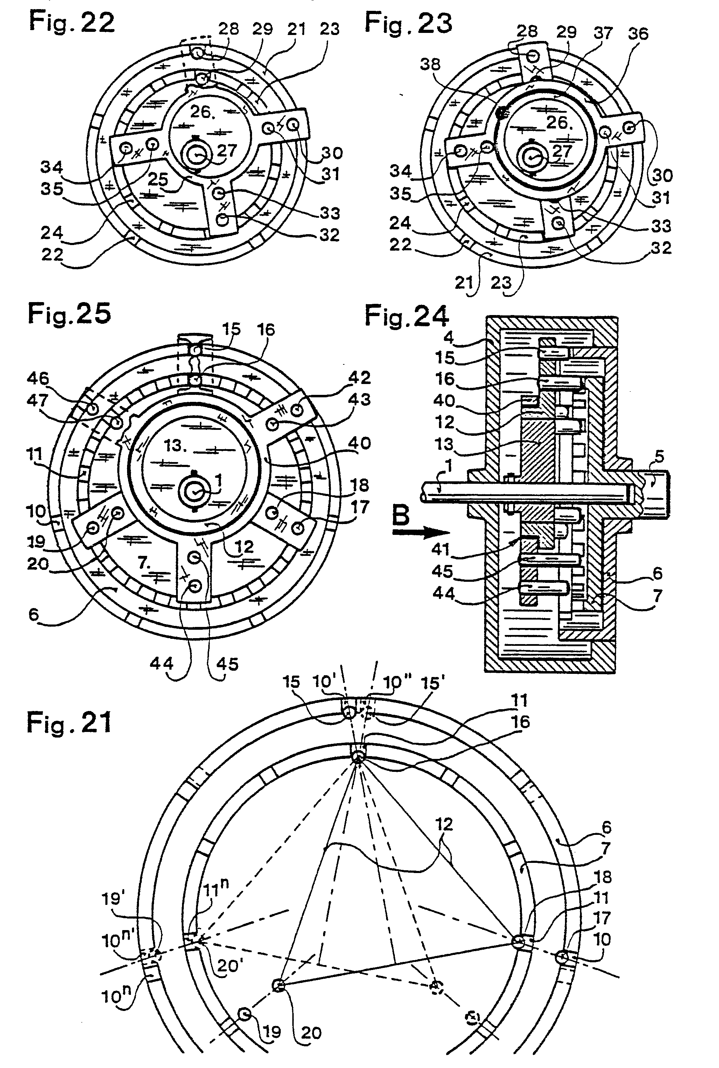

La figure 21 illustre schématiquement le pivotement instantané du rotor provoquant l'entraînement d'un pas de l'organe réducteur entraîné externe 6, soit dans le cadre de la seconde forme d'exécution décrite le passage de la position illustrée à la figure 10 jusqu'à celle illustrée à la figure 11.

Le rotor 12 est symbolisé par un triangle dont les sommets portent les paires d'organes d'actionnement 15, 16 ; 17, 18 et 19, 20.

Au moment où l'organe d'actionnement 18 quitte l'encoche 11 de l'organe réducteur d'appui 7 et que l'organe d'actionnement 17 quitte l'encoche 10 de l'organe réducteur entraîné 6, les organes d'actionnement 15, 16 entrent dans les encoches 10' respectivement 11 des organes réducteurs 6, 7 que le pas précédent du rotor 12 a placées l'une en face de l'autre.

Pendant le pas suivant du mouvement du rotor, celui-ci se déplace de la position illustrée en trait plein à la position illustrée en traits pointillés par un pivotement instantané autour du centre de l'organe d'actionnement 16 prisonnier de l'encoche 11 de l'organe réducteur d'appui 7. Pendant ce pivotement seule la paire d'organes d'actionnement 15, 16 est en prise avec les organes réducteurs 6, 7 l'organe d'actionnement 16 restant fixe, son axe servant d'axe de pivotement au rotor 12, tandis que l'organe d'actionnement 15, en prise avec l'encoche 10' entraîne celle-ci jusque dans sa position illustrée en traits pointillés 15', 10". A ce moment une encoche 10 de l'organe réducteur entraîné est arrivé en 10' dans une position pour laquelle elle est située en face d'une encoche 11 de l'organe réducteur 7.

Ainsi, l'organe réducteur entraîné 6 a été déplacé d'une valeur angulaire α pendant cette rotation instantanée du rotor 12 autour de l'axe de l'organe d'actionnement 16. Au moment où l'organe d'actionnement 15 est arrivé en 15' et va quitter l'encoche 10" les organes d'actionnement 19, 20 sont arrivés en 19' et 20' prêts à s'engager dans une encoche $10^{n'}$ et $11^n$. Un nouveau pas s'effectue alors par un pivotement instantané du rotor 12 autour de son organe d'actionnement 20.

Dans les deux formes d'exécution décrites l'un des organes de réduction est fixe et sert d'appui lors du pivotement instantané du rotor pour provoquer l'entraînement de l'autre organe réducteur. Dans ces cas le point autour duquel s'effectue le pivotement instantané du rotor est l'axe de l'organe d'actionnement du rotor qui est à ce moment en prise avec un élément d'entraînement de l'organe réducteur d'appui.

Les principaux avantages des réducteurs mécaniques selon l'invention sont :

1. Un nombre réduit de pièces dont l'usinage est facile et peut être réalisé avec précision.
2. L'obtention de rapports de réduction entiers.
3. La possibilité de réaliser un grand nombre de rapports de réduction.
4. La possibilité, dans un faible encombrement de réaliser un rapport élevé tout en transmettant un couple important.
5. Du fait que le mouvement est décomposé en un grand nombre de pas unitaires, la précision est améliorée, ceci d'autant plus que les jeux pouvant se créer par l'usure ne se cumulent pas. En effet, chaque pas est positionné et verrouillé pour lui-même, par l'engrènement d'une paire d'organes d'actionnement dans une paire correspondante d'éléments d'entraînement.

Si l'on considère par exemple un réducteur conforme à la ligne 5 du tableau II, il faut $17 \times 38 = 646$ pas pour un tour de l'organe entraîné.

La précision de chacun de ces pas est donnée par l'interaction d'une paire d'organes d'actionnement avec une paire d'éléments d'entraînement sans qu'il puisse y avoir cumul des jeux existants.

Dans des variantes non illustrées, on peut prévoir que les deux organes réducteurs d'appui et entraîné soient tous deux déplaçables angulairement et reliés par une liaison cinématique permanente autre que le rotor. Cette liaison cinématique peut par exemple être formée par un pignon pivoté sur le boîtier et en prise avec des dentures portées par chacun des organes réducteurs. Dans une telle réalisation, les organes réducteurs se déplacent angulairement en sens inverse pendant le fonctionnement. Du fait de ce mouvement des deux organes réducteurs, le pivotement instantané du rotor, prenant appui sur l'organe réducteur d'appui et entraînant l'organe réducteur entraîné, s'effectue autour d'un point situé sur une ligne reliant les centres des deux organes d'actionnement de la paire en prise avec les organes réducteurs.

Ainsi, d'une façon tout à fait générale la formule permettant de déterminer le nombre d'éléments d'entraînement de l'organe réducteur d'appui est :

$$N_1 = \frac{V \cdot N_2 \mp n}{N_2 in} + X \cdot N_2 \tag{III}$$

où :

V et n sont des nombres entiers supérieurs ou égal à 1, et

X est un nombre entier supérieur ou égal à 0, les symboles ayant la même signification que précédemment et le signe utilisé au rémunérateur du premier terme de cette équation étant le signe — lorsque l'exentrique tourne dans le même sens que l'organe réducteur entraîné et le signe + lorsqu'ils tournent en sens inverse l'un de l'autre.

On peut également exprimer $N_2$ en fonction de $N_1$ ce qui donne la formule :

$$N_2 = \frac{Y \cdot N_1 \pm n}{N_1 in} + Z \cdot N_1 \tag{IIIa}$$

où

Y et n sont des nombres entiers supérieurs ou égal à 1,

Z un nombre entier supérieur ou égal à 0 et les symboles ayant la même signification que précédemment et où le signe utilisé au numérotateur du premier terme de cette équation est le signe + lorsque l'excentrique tourne dans le même sens que l'organe réducteur entraîné et le signe — lorsqu'ils tournent en sens inverse l'un de l'autre.

On remarque que dans ces formules I, II et III ou Ia, IIa et IIIa si $N_2$ est divisible par $N_2 in$ respectivement que $N_1$ est divisible par $n_1 in$ il est impossible de satisfaire à la relation ce qui veut dire qu'il n'est pas possible de réaliser un réducteur avec les chiffres choisis. En effet, tous ces nombres doivent obligatoirement être entiers.

La troisième forme d'exécution du réducteur mécanique illustrée à la figure 22 comporte un organe réducteur externe 21 présentant cinq éléments d'entraînement 22 et un organe réducteur interne 23 présentant onze éléments d'entraînement 24. Un rotor 25 entraîné par un excentrique 26 solidaire d'un arbre moteur 27 comporte quatre bras portant chacun une paire d'organes d'actionnement 28, 29 ; 30, 31 ; 32, 33 et 34, 35 coopérant successivement avec les éléments d'entraînement 22, 24 des organes réducteurs 21, 23.

Dans cette exécution on voit que le nombre d'éléments d'entraînement 22 et 24 est bien conforme à la formule III générale lorsque l'organe réducteur externe 21 est l'organe d'appui.

$$N_1 = \frac{V \cdot N_2 - n}{N_2 \cdot in} + X \cdot N_2 ,$$

le signe — est utilisé puisque l'organe réducteur entraîné tourne dans le même sens que l'excentrique.

$$\text{si } V = 1 \;; \quad X = 0 \;; \quad \text{et} \quad n = 1 \quad \text{on a :}$$

$$N_1 = \frac{11 - 1}{2} \quad \text{soit } 5$$

Le rapport de réduction dans ce cas est de

$$R = N_1 \cdot N_2 \cdot in = 5 \cdot 2 = 10 .$$

Si l'on considère que l'organe réducteur d'appui est l'organe interne 23 on a :

$$N_1 = \frac{V \cdot N_2 + n}{N_2 \cdot in} + X \cdot N_2 \,,$$

le signe + est utilisé puisque l'organe réducteur entraîné tourne dans le sens inverse de l'excentrique et si :

$$V = 1 \;; \quad X = 1 \;; \quad \text{et} \quad n = 1 \quad \text{on a :}$$

$$N_1 = \frac{5 + 1}{1} + 5 = 11$$

et le rapport de réduction est de

$$R = N_1 \cdot N_2 \cdot in = 11 \cdot 1 = 11 .$$

La figure 23 illustre une variante du réducteur mécanique illustré à la figure 22 dans laquelle le rotor entraîné par l'arbre moteur 27 et l'excentrique 26 est constitué par deux pièces 36, 37 montées l'une sur l'autre et présentant chacune deux bras portant les organes d'actionnement 28, 29 et 32, 33 respectivement 30, 31 et 34, 35.

Ces deux pièces 36, 37 sont susceptibles de se déplacer angulairement l'une par rapport à l'autre contre l'action élastique d'un élément ressort 38.

Cette réalisation est particulièrement avantageuse car il est possible d'ajuster avec précision les diamètres des goupilles formant les organes d'actionnement du rotor à la largeur des encoches formant les éléments d'entraînement des organes réducteurs de telle sorte que l'entraînement se fasse sans jeu. En effet, grâce à cette élasticité entre les organes d'actionnement successifs, l'introduction de ceux-ci dans les encoches correspondantes s'effectue sans choc même si les tolérances sont très serrées.

La quatrième forme d'exécution illustrée aux figures 24 et 25 constitue en fait une variante à deux rotors du réducteur illustré aux figures 1 à 9. En effet, ce réducteur mécanique comporte un arbre moteur 1, un arbre de sortie 5, un boîtier 4, deux organes réducteurs 6, 7, un excentrique 13 et un rotor 12 comme dans la première forme d'exécution.

Un second rotor 40 à trois branches également est tourillonné sur une surface annulaire 41 du premier rotor 12, concentrique à l'excentrique 13. Les branches de ce second rotor s'étendent suivant les bisectrices des angles que forment les branches du premier rotor 12. Les branches de ce second rotor portent également des paires d'organes d'actionnement 42, 43 ; 44, 45 et 46, 47 coopérant avec les encoches 10, 11 des organes réducteurs.

On remarque toutefois que l'organe réducteur d'appui, ici l'organe externe 6 comporte sept encoches 10, comme dans la première forme d'exécution, mais que du fait du second rotor 40, décalé angulairement par rapport au premier rotor 12, le nombre d'encoches 11 de l'organe réducteur entraîné 7 est doublé, mais n'a aucune influence sur le fonctionnement ou le rapport de réduction du réducteur. Les deux rotors travaillent chacun pour soi et il faut tenir compte de cet état de fait pour la calculation du réducteur.

Un des avantages d'une telle réalisation réside dans l'augmentation du couple qui peut être transmis par le réducteur, du fait qu'il y a toujours deux paires d'organes d'actionnement, une de chaque rotor, qui sont en prise avec les organes réducteurs.

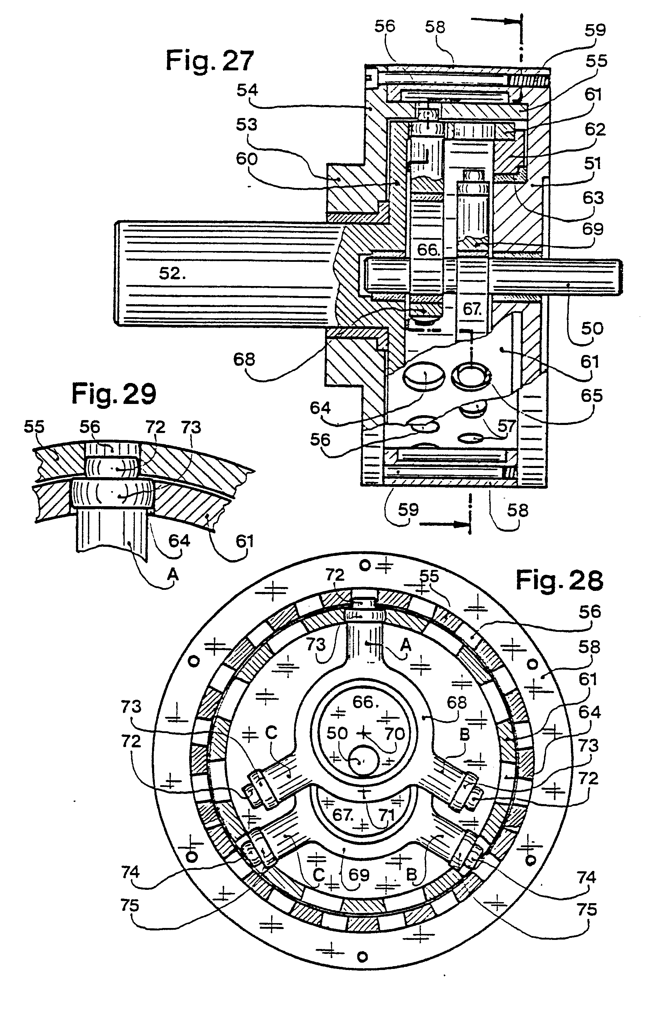

La figure 26 illustre une cinquième forme d'exécution du réducteur comprenant un arbre d'entrée 150 solidaire d'un excentrique 151 entraînant un rotor 152 comportant au moins trois paires d'organes d'actionnement. Dans cette exécution, chaque paire d'organes d'actionnement 153, 154 est constituée par un téton cylindrique solidaire d'un tourillon 155 chassé ou goupillé dans un perçage du rotor 152. De cette façon les tétons sont situés sur les faces latérales opposées du rotor et la distance séparant leurs axes peut être très faible sans nuire aux dimensions et donc à la robustesse de chacun d'eux.

Ce réducteur comporte encore un organe réducteur d'appui fixe 156 constitué par une des parois latérales d'un boîtier 157 et un organe réducteur entraîné 158 pivoté sur l'arbre d'entrée 150 et constituant un arbre de sortie 159. Les éléments d'entraînement des organes réducteurs 156, 158 sont constitués par des fraisures radiales 160, 161 respectivement.

Le fonctionnement de ce réducteur est le même que celui des formes d'exécution précédentes mais permet de par sa construction de réaliser une très petite avance par pas de l'organe réducteur entraîné et donc un très grand rapport de réduction tout en permettant la transmission de couples élevés.

Il est évident que dans les cinq formes d'exécution du réducteur décrites plus haut, il est possible de prévoir une ou plusieurs masses d'équilibrage, solidaires de l'arbre moteur et de l'excentrique, pour équilibrer dynamiquement ses parties en rotation rapide.

La sixième forme d'exécution du réducteur, illustrée aux figures 27, 28 et 29, illustre une réalisation industrielle de celui-ci particulièrement robuste, peu encombrante, comportant un nombre de pièces limité dont la fabrication est rendue facile grâce à leur conception et leur forme qui ne font intervenir que des usinages faciles à réaliser tels que des perçages ou tournages.

Cette réalisation correspond à un réducteur du type de celui mentionné à la seconde ligne du tableau I, c'est-à-dire dont les caractéristiques principales sont les suivantes :

$$N_1 = 18 \quad N_1 in = 5$$
$$N_2 = 11 \quad N_2 in = 3$$
$$R = 55 \quad n = 1$$

Dans cette sixième forme d'exécution le réducteur comporte un arbre d'entrée ou arbre moteur 50 pivoté d'une part dans un flasque 51 fixe et d'autre part dans l'extrémité d'un arbre de sortie 52, coaxial à l'arbre moteur 50. Cet arbre de sortie 52 est tourillonné dans le moyeu 53 d'une cloche 54 dont la jupe cylindrique 55 constitue l'organe réducteur fixe. Cette jupe cylindrique 55 est coaxiale aux arbres moteur 50 de sortie 52 et comporte deux rangées de dix-huit perçages circulaires 56, 57 chacune uniformément répartie sur la périphérie de cette jupe, chaque rangée étant disposée dans un plan perpendiculaire aux arbres 50, 52. Ces perçages 56, 57 constituent les éléments d'entraînement de l'organe réducteur fixe 53, 54, 55.

Ce réducteur comporte encore un carter 58 fixé rigidement et de façon étanche à l'aide de boulons 59 sur le flasque 51 et un rebord que comporte l'organe réducteur fixe 53, 54, 55.

Le réducteur comporte encore un organe réducteur entraîné constitué par un cloche 60 solidaire ou venue d'une pièce de fabrication avec l'arbre entraîné 52, dont la jupe 61 cylindrique est située concentriquement à l'intérieur de la jupe 55 de l'organe réducteur fixe ou d'appui 53, 54, 55. L'extrémité libre de cette jupe 61 est solidaire d'une bague 62 pivotée sur un moyeu 63 que présente le flasque fixe 51.

Cette jupe 61 de l'organe réducteur entraîné 60, 61 comporte deux rangées de perçages circulaires 64, 65 alignées sur les plans contenant les perçages 56, 57 de la jupe 55 de l'organe réducteur d'appui et uniformément répartis sur la périphérie de cette jupe 61. Chaque rangée de perçages comporte onze perçages 64, 65 respectivement constituant les éléments d'entraînement de l'organe réducteur entraîné.

Le diamètre des perçages 64, 65 est plus grand que celui des perçages 56, 57.

Ce réducteur comporte encore deux excentriques 66, 67 solidaires de l'arbre moteur 50, décalés de 180° soit en opposition l'un par rapport à l'autre et dont les plans médians sont alignés sur les centres des perçages 56, 64 respectivement 57, 65.

Des rotors 68, 69 à trois branches A, B, C sont tourillonnés fous sur les excentriques 66, 67 respectivement. Ces rotors 68, 69 sont ainsi décalés axialement l'un par rapport à l'autre mais sont placés dans des positions angulaires identiques par rapport à leur centre de rotation respectif 70, 71.

Chaque branche A, B, C de chaque rotor 68, 69 porte une paire d'organes d'actionnement 72, 73 respectivement 74, 75 formés par des tétons dont la surface périphérique est une tranche de sphère. Le diamètre des tranches de sphères constituant les tétons extérieurs 72, 74 destinés à coopérer avec les perçages 56, 57 de l'organe réducteur fixe 53, 54, 55 correspond au diamètre de ces perçages 56, 57. Le plus grand diamètre des tranches de sphères constituant les tétons intérieurs 73, 75 destinés à coopérer avec les perçages 64, 65 de l'organe réducteur mobile entraîné 60, 61 correspond au diamètre de ces perçages 64, 65.

La différence entre le diamètre des perçages 56, 57 et 64, 65 est suffisante pour que lors du fonctionnement du réducteur les tétons 72, 74 puissent passer au travers des perçages 64, 65 avant de coopérer avec les perçages 56, 57.

Une certaine quantité d'huile est enfermée dans l'espace interne du carter 58 afin de lubrifier toutes les surfaces en mouvement relatif, paliers et organes d'actionnement, lors du fonctionnement du réducteur.

Cette sixième forme d'exécution du réducteur fonctionne suivant le même principe que les formes d'exécution précédemment décrites, elle présente toutefois les avantages supplémentaires suivants :
1. Les masses en mouvement sont équilibrées puisque les rotors 68, 69 sont en opposition.
2. Les organes d'actionnement portés par les tranches des rotors ne subissent aucun couple puisque les forces qui leur sont appliquées passent par leurs axes respectifs. Ceci est également vrai pour les éléments d'entraînement des organes réducteurs.

Dans des variantes de cette forme d'exécution les tétons et les trous avec lesquels ils coopèrent peuvent avoir des formes différentes. Par exemple les tétons pourraient être remplacés par des galets et les trous par des fentes rectangulaires de dimensions correspondantes.

Dans d'autres variantes, le réducteur pourrait comporter plusieurs rotors, trois quatre ou plus, tourillonnés fous chacun sur un excentrique solidaire de l'arbre moteur. Ces excentriques sont décalés angulairement les uns par rapport aux autres de préférence de manière à être répartis uniformément autour de l'arbre moteur.

D'une façon générale, il faut encore noter que ce réducteur est réversible, c'est-à-dire qu'il est possible d'inverser les fonctions de l'arbre d'entrée et de l'arbre de sortie pour obtenir un multiplicateur à la place d'un diviseur. Il est vrai que pour des rapports de multiplication élevés le couple moteur pourrait être prohibitif.

Enfin, le réducteur est symétrique, c'est-à-dire que l'arbre d'entrée peut être entraîné soit dans un sens soit dans l'autre, provoquant également une inversion du sens de rotation de l'arbre de sortie.

Dans des variantes, les organes d'actionnement pourraient être constitués par des fentes ou fraisures et les éléments d'entraînement par des goupilles, dents, etc. Pour le bon fonctionnement du réducteur, il faut qu'il y ait engrènement sans jeu des organes d'actionnement et des éléments d'entraînement quelles que soient leurs formes.

On remarque encore que dans un réducteur selon l'invention, l'excentrique exécute un relativement grand mouvement angulaire pour chaque pas de sorte qu'un jeu de l'excentrique sur l'arbre moteur ou du rotor sur l'excentrique ne se communique pratiquement pas à l'arbre de sortie.

Enfin, il faut noter que des avantages constructifs déterminants sont obtenus, tels réduction de volume du réducteur, réduction du nombre de pièces et d'usinages, plus grande précision, lorsque la valeur $N_1$in et/ou de $N_2$in est égale ou supérieure à deux.

Ces réducteurs peuvent être utilisés dans de nombreux domaines techniques, tels la robotique, les machines agricoles, la machine-outil, des mécanismes horaires, des affichages analogiques, la micro-mécanique, les instruments et appareils de mesures, les transmissions, etc.

**Revendications**

1. Réducteur mécanique comprenant un axe moteur (1) et un organe entraîné (5) tournant à des vitesses angulaires différentes fonction du rapport de réduction du réducteur, comportant deux organes (6, 7) déplaçables angulairement l'un par rapport à l'autre et coaxiaux entre eux et par rapport à l'arbre moteur (1), comprenant chacun une série d'éléments d'entraînement (10, 11) uniformément répartis autour du centre de rotation de l'organe réducteur correspondant ; caractérisé par le fait qu'il comporte au moins un rotor (12) entraîné par l'arbre moteur (1) comprenant au moins trois paires d'organes d'actionnement (15, 16 ; 17, 18 ; 19, 20) réparties uniformément autour de son centre, l'un des organes d'actionnement de chaque paire coopérant avec les éléments d'entraînement d'un des organes réducteurs, tandis que l'autre organe d'actionnement de chaque paire coopère avec les éléments d'entraînement de l'autre organe réducteur ; par le fait qu'au plus deux paires d'organes d'actionnement du rotor (12) sont simultanément en prise avec les éléments d'entraînement correspondants ; et par le fait que le mouvement rotatif relatif entre les deux organes réducteurs (6, 7) est provoqué par un pivotement instantané du rotor (12) prenant appui sur au moins l'un des organes réducteurs autour d'un point situé sur une ligne reliant les centres de pivotement des organes d'actionnement de la paire en prise avec les éléments d'entraînement correspondants et provoquant l'entraînement de l'autre organe réducteur, l'amplitude de chaque pas du déplacement angulaire relatif des organes réducteurs (6, 7) dépendant d'une part de l'angle dudit pivotement instantané et d'autre part de la distance séparant les points de contact des organes d'actionnement (15, 16) de ladite paire en prise avec les organes réducteurs.

2. Réducteur selon la revendication 1, caractérisé par le fait que la série d'éléments d'entraînement (10) de l'organe réducteur d'appui (6) est située sur un cercle d'un diamètre différent du cercle sur lequel sont situés les éléments d'entraînement (11) de l'organe réducteur entraîné (7).

3. Réducteur selon la revendication 1, caractérisé par le fait que le pivotement instantané du rotor (12) s'effectue autour du centre d'un des organes d'actionnement (15) de la paire en prise avec les organes réducteurs.

4. Réducteur selon la revendication 1, caractérisé par le fait que le pivotement instantané du rotor (12) s'effectue autour d'un point situé sur un rayon du rotor reliant les centres de pivotement des organes d'actionnement (15, 16) d'une même paire.

5. Réducteur selon la revendication 3, caractérisé par le fait que l'organe réducteur (6) coopérant avec les organes d'actionnement servant de centres aux pivotements instantanés successifs du rotor est fixe tandis que l'autre organe réducteur (7) est solidaire de l'organe entraîné (5).

6. Réducteur selon l'une des revendications 1 à 5, caractérisé par le fait que le nombre d'éléments d'entraînement (10) de l'organe réducteur d'appui (6) est égal à :

$$N_1 = \frac{V \cdot N_2 \mp n}{N_2 \cdot in} + X \cdot N_2$$

où :

V et n sont des nombres entiers égal ou supérieur à 1.

X est un nombre entier égal ou supérieur à 0.

$N_1$ est le nombre d'éléments d'entraînement de l'organe réducteur d'appui.

$N_2$ est le nombre d'éléments d'entraînement de l'organe réducteur entraîné.

$N_2$in est le nombre d'éléments d'entraînement de l'organe réducteur entraîné situés entre deux organes d'actionnement appartenant à des paires différentes d'un rotor en prise avec cet organe réducteur.

Le signe — étant utilisé lorsque l'arbre moteur (1) tourne dans le même sens que l'organe réducteur entraîné et le signe + lorsqu'ils tournent en sens inverse l'un de l'autre.

7. Réducteur selon l'une des revendications 1 à 5, caractérisé par le fait que le nombre d'éléments d'entraînement de l'organe réducteur entraîné est égal à :

$$N_2 = \frac{Y \cdot N_1 \pm n}{N_1 \cdot in} + Z \cdot N_1$$

où :

Y et n sont des nombres entiers égal ou supérieur à 1.

Z est un nombre entier égal ou supérieur à 0.

$N_1$ est le nombre d'éléments d'entraînement de l'organe réducteur d'appui.

$N_2$ est le nombre d'éléments d'entraînement de l'organe réducteur entraîné.

$N_2$in est le nombre d'éléments d'entraînement de l'organe réducteur entraîné situés entre deux organes d'actionnement appartenant à des paires différentes d'un rotor en prise avec cet organe réducteur.

Le signe + étant utilisé lorsque l'arbre moteur (1) tourne dans le même sens que l'organe réducteur entraîné et le signe — lorsqu'ils tournent en sens inverse l'un de l'autre.

8. Réducteur selon la revendication 6 ou 7, caractérisé par le fait que le rapport de réduction est égal à :

$$R = \frac{N_1 \cdot N_2 in}{n}$$

9. Réducteur selon l'une des revendications précédentes, caractérisé par le fait que les organes réducteurs sont tous deux mobiles et reliés entre eux par une liaison cinématique indépendante du rotor.

10. Réducteur selon l'une des revendications 1 à 9, caractérisé par le fait qu'il comporte deux rotors, les paires d'organes d'actionnement des rotors étant intercalées et par le fait que le nombre d'éléments d'entraînement d'au moins un organe réducteur est doublé.

11. Réducteur selon l'une des revendications 1 à 10, caractérisé par le fait que deux paires adjacentes d'organes d'actionnement d'un rotor sont reliées entre elles par un dispositif permettant un décalage angulaire de la position de ces paires l'une par rapport à l'autre.

12. Réducteur selon l'une des revendications 1 à 9, caractérisé par le fait qu'il comporte un seul rotor et que le nombre d'éléments d'entraînement d'au moins un organe réducteur est impair.

13. Réducteur selon la revendication 1 ou la revendication 12, caractérisé par le fait que les éléments d'entraînement des organes réducteurs d'appui et entraîné sont disposés dans un plan perpendiculaire à l'arbre moteur (1), situé du même côté du rotor, les organes d'actionnement de ce rotor s'étendant perpendiculairement hors d'une des faces latérales de celui-ci (Fig. 1).

14. Réducteur selon la revendication 1 ou la revendication 12, caractérisé par le fait que les éléments d'entraînement des organes réducteurs d'appui et entraîné sont disposés dans des plans perpendiculaires à l'arbre moteur (1) situés de part et d'autre du rotor, les organes d'actionnement de chaque paire du rotor s'étendant sur les faces opposées de ce rotor (Fig. 26).

15. Réducteur selon la revendication 6 ou 7, caractérisé par le fait que $N_1$in ou $N_2$in est égal ou supérieur à deux.

16. Réducteur selon l'une des revendications 1 à 9 ou 12 à 14, caractérisé par le fait que le rotor est entraîné par l'arbre moteur (1) par l'intermédiaire d'un excentrique (13).

17. Réducteur selon la revendication 10, caractérisé par le fait que les deux rotors sont entraînés par l'arbre moteur (1) par l'intermédiaire d'un même excentrique ou de deux excentriques concentriques entre eux.

18. Réducteur selon la revendication 10, caractérisé par le fait que chaque rotor est entraîné par l'arbre moteur (1) par l'intermédiaire d'un excentrique.

**0 155 497**

19. Réducteur selon la revendication 18, caractérisé par le fait que les escentriques sont en opposition.

20. Réducteur selon l'une des revendications 1 à 9, caractérisé par le fait qu'il comporte plusieurs rotors entraînés chacun par un excentrique solidaire de l'arbre moteur (1), et par le fait que ces excentriques sont uniformément distribués autour dudit arbre moteur.

21. Réducteur selon l'une des revendications précédentes, caractérisé par le fait que les organes réducteurs sont constitués par deux éléments cylindriques concentriques (55, 61) entourant le ou les rotors (68, 69) et par le fait que les éléments d'entraînement de ces organes réducteur sont constitués par des perçages (56, 57 ; 64, 65).

22. Réducteur selon la revendication 21, caractérisé par le fait que lesdits perçages sont circulaires et que le diamètre des perçages (64, 65) de l'organe réducteur interne est plus grand que celui des perçages (56, 57) de l'organe réducteur externe.

23. Réducteur selon la revendication 22, caractérisé par le fait que chaque paire d'organes d'actionnement comporte deux tétons (72, 73) coaxiaux dont les diamètres correspondent aux diamètres des perçages des organes réducteurs correspondants.

24. Réducteur selon la revendication 23, caractérisé par le fait que les tétons (72, 73) présentent une surface périphérique en forme de tranche de sphère.

25. Réducteur selon la revendication 17, caractérisé par le fait que les rotors (12, 40) sont disposés sensiblement dans un même plan et que l'organe réducteur entraîné (7) comporte une série d'éléments d'entraînement coopérant avec les organes d'actionnement correspondants d'un rotor et une seconde série d'éléments d'entraînement coopérant avec les organes d'actionnement correspondants de l'autre rotor tandis que l'organe réducteur d'appui (6) comporte une seule série d'éléments d'entraînement coopérant avec les organes d'actionnement correspondants des deux rotors (12, 40).

26. Réducteur selon l'une des revendications 18, 19 ou 20, caractérisé par le fait que les rotors sont disposés dans des plans parallèles et que les organes d'actionnement de chaque rotor coopèrent avec des éléments d'entraînement correspondants de chaque organe de réduction (Fig. 27).

**Claims**

1. Mechanical reducer comprising a motor shaft (1) and a driven member (5) revolving at different angular speeds depending from the reduction ratio of the reducer, comprising two reduction members (6, 7) angularly displacable the one with respect to the other and coaxial between themselve and with respect to the motor shaft (1), each comprising a series of driving elements (10, 11) uniformely distributed around the center of rotation of the corresponding reduction member ; characterized by the fact that it comprises at least one rotor (12) driven by the motor shaft (1) comprising at least three pairs of actuating members (15, 16 ; 17, 18 ; 19, 20) uniformely distributed around its center, one of the actuating members of each pair cooperating with the driving element of one of the reduction members, whereas the other actuating member of each pair cooperates with the driving elements of the other reduction member ; by the fact that at most two pairs of actuating members of the rotor (12) are simultaneously meshing with the corresponding driving elements ; and by the fact that the relative rotative movement between the two reduction members (6, 7) is caused by an instantaneous pivotement of the rotor (12) bearing against one of the reduction members around a point located on a line connecting the centers of pivotement of the actuating members of the pair which is meshing with the corresponding driving members and causing the driving of the other reduction members, the amplitude of each step of the relative angular displacement of the reduction members (6, 7) depending on the one hand from the said instantaneous pivotement and on the other hand from the distance separating the two contact points of the actuating members (15, 16) of the said pair meshing with the reduction members.

2. Reducer according to claim 1, characterized by the fact that the series of driving members (10) of the bearer reduction member (6) is located on a circle having a different diameter from the cercle on which are located the driving element (11) of the driven reduction member (7).

3. Reducer according to claim 1, characterized by the fact that the instantaneous pivotement of the rotor (12) is made around the center of one of the actuating members (15) of the pair which is meshing with the reduction members.

4. Reducer according to claim 1, characterized by the fact that the instantaneous pivotement of the rotor (12) is made around a point located on a radius of the rotor connecting the centers of pivotement of the actuating members (15, 16) of the same pair.

5. Reducer according to claim 3, characterized by the fact that the reduction member (6) cooperating with the actuating members serving as center for the successive instantaneous pivotements of the rotor is fixed whereas the other reduction member (7) is fast with the driven member (5).

6. Reducer according to one of claims 1 to 5, characterized by the fact that the driving elements (10) of the bearer reduction emmber (6) is equal to

$$N_1 = \frac{V \cdot N_2 \mp n}{N_2 \cdot in} + X \cdot N_2$$

13

where

V and n are whole numbers equal or higher than 1.

X is a whole number equal or higher than 0.

$N_1$ is the number of driving elements of the bearer reduction member.

$N_2$ is the number of driving elements of the driven reduction member.

$N_2$in is the number of driving elements of the driven reduction member located between two actuating members belonging to different pairs of a rotor which are meshing with this reduction member.

The sign — being used when the motor shaft (1) revolves in the same direction than the driven reduction member and the sign + when they revolve in reversed direction the one from the other.

7. Reducer according to one of claims 1 to 5, characterized by the fact that the number of driving elements of the driven reduction member is equal to :

$$N_2 = \frac{Y \cdot N_1 \pm n}{N_1 \cdot in} + Z \cdot N_1$$

where :

Y and n are whole numbers equal or higher than 1.

Z is a whole number equal or higher than 0.

$N_1$ is the number of driving elements of the bearer reduction member.

$N_2$ is the number of driving elements of the driven reduction member.

$N_2$in is the number of driving elements of the driven reduction member located between two actuating members belonging to different pairs of the rotor meshing with this reduction member.

The sign + being used when the motor shaft (1) revolves in the same direction than the driven reduction member and the sign — when they revolves in reversed direction the one from the other.

8. Reducer according to claims 6 or 7, characterized by the fact that the reduction ratio is equal to :

$$R = \frac{N_1 \cdot N_2 in}{n}$$

9. Reducer according to one of the preceeding claims, characterized by the fact that the reduction members are both movable and connected between them by a cinematic linkage which is independant from the rotor.

10. Reducer according to one of the claims 1 to 9, characterized by the fact that it comprises two rotors, the pairs of actuating members of the rotors being intercalated and by the fact that the number of driving elements of at least one reduction member is doubled.

11. Reducer according to one of claims 1 to 10, characterized by the fact that two adjacent pairs of actuating members of a rotor are connected between them by means of a device permitting an angular displacement of the position of these pairs the one with respect to the other.

12. Reducer according to one of the claims 1 to 9, characterized by the fact that it comprises only one rotor and that the number of driving elements of at least one reduction member is uneven.

13. Reducer according to claim 1 or to claim 12, characterized by the fact that the driving elements of the bearer and driven reduction members are located in a plan perpendicular to the motor shaft (1), located on the same side of the rotor, the actuating members of this rotor extending perpendicularly from one of its lateral faces (Fig. 1).

14. Reducer according to claim 1 or to claim 12, characterized by the fact that the driving elements of the bearer and the driven reduction members are located in perpendicular plans to the motor shaft (1) located on either side of the rotors, the actuating members of each pair of the rotor extending on opposed faces of this rotor (Fig. 26).

15. Reducer according to claims 6 or 7, characterized by the fact that the $N_1$in or $N_2$in is equal or higher than two.

16. Reducer according to one of the claims 1 to 9, or 12 to 14, characterized by the fact that the rotor is driven by the motor shaft (1) through an excentric (13).

17. Reducer according to claim 10, characterized by the fact that the two rotors are driven by the motor shaft (1) through the same excentric or through two excentrics which are concentric between them.

18. Reducer according to claim 10, characterized by the fact that each rotor is driven by the motor shaft (1) by means of an excentric.

19. Reducer according to claim 18, characterized by the fact that the excentrics are in opposition.

20. Reducer according to one of the claims 1 to 9, characterized by the fact that it comprises several rotors each driven by an excentric fast with the motor shaft (1) and by the fact that these excentrics are uniformly distributed around the said motor shaft.

21. Reducer according to one of the preceeding claims, characterized by the fact that the reduction members are constituted by two concentric cylindrical elements (55, 61) surrounding the rotor or the rotors (68, 69) and by the fact that the driving elements of these reduction members are constituted by holes (56, 57 ; 64, 65).

22. Reducer according to claim 21, characterized by the fact that the said holes are circular and that the diameter of the holes (64, 65) of the internal reduction members is greater than the one of the holes (56, 57) of the outside reduction member.

23. Reducer according to claim 22, characterized by the fact that each pair of actuating members comprises two coaxial pins (72, 73) the diameter of which corresponds to the diameters of the holes of the corresponding reduction members.

24. Reducer according to claim 23, characterized by the fact that the pins (72, 73) have a peripheral surface having the shape of a slice of sphere.

25. Reducer according to claim 17, characterized by the fact that the rotors (12, 40) are located substantially in a same plane and that the driven reduction member (7) comprises a series of driving members cooperating with the corresponding actuating members of a rotor and a second series of driving members cooperating with the corresponding actuating members of the other rotor whereas the bearer reduction member (6) comprises only one series of driving elements cooperating with the corresponding actuating member of both rotors (12, 40).

26. Reducer according to one of claims 18, 19 or 20 characterized by the fact that the rotors are located in parallel plans and that the actuating members of each rotor cooperate with corresponding driving elements of each reduction members (Fig. 27).


**Patentansprüche**

1. Mechanisches Untersetzungsgetriebe mit einer Motorwelle (1) und einem angetriebenen Organ (5), die in Abhängigkeit von der Untersetzung des Untersetzungsgetriebes mit unterschiedlichen Winkelgeschwindigkeiten umlaufen, mit zwei Untersetzungsorganen (6, 7), die relativ zueinander winkelversetzbar und zueinander sowie zur Motorwelle (1) koaxial sind und je eine Reihe von Antriebselementen (10, 11) aufweisen, die um die Drehmitte des zugeordneten Untersetzungsorganes gleichmäßig verteilt sind, dadurch gekennzeichnet, daß es zumindest einen von der Motorwelle (1) angetriebenen Rotor (12) mit zumindest drei Paaren von Antriebsorganen (15, 16 ; 17, 18 ; 19, 20) aufweist, die um seine Mitte gleichmäßig verteilt sind, wobei eines der Antriebsorgane jedes Paares mit den Antriebselementen des einen Untersetzungsorganes zusammenwirkt, wogegen das andere Antriebsorgan jedes Paares mit den Antriebselementen des anderen Antriebsorganes zusammenwirkt ; daß höchstens zwei Paare von Antriebsorganen des Rotors (12) gleichzeitig mit den zugeordneten Antriebselementen in Eingriff stehen ; und daß die relative Drehbewegung zwischen den beiden Untersetzungsorganen (6, 7) durch ein Momentanschwenken des Rotors (12) hervorgerufen wird, der an zumindest einem der Untersetzungsorgane an einem Punkt angreift, der auf einer Linie liegt, welche die Schwenkmitten der Antriebsorgane des mit den zugeordneten Antriebselementen in Eingriff stehenden und den Antrieb des anderen Untersetzungsorganes bewirkenden Paares verbindet, wobei die Amplitude jedes Schrittes der relativen Winkelbewegung der Untersetzungsorgane (6, 7) einerseits vom Winkel der Momentanschwenkbewegung und anderseits vom Abstand zwischen den Berührungspunkten der Antriebsorgane (15, 16) des mit den Untersetzungsorganen in Eingriff stehenden Paares abhängt.

2. Untersetzungsgetriebe nach Anspruch 1, dadurch gekennzeichnet, daß die Reihe von Antriebselementen (10) des Abstützungs-Untersetzungsorganes (6) auf einem Kreis liegt, dessen Durchmesser sich vom Durchmesser jenes Kreises unterscheidet, auf welchem die Antriebselemente (11) des angetriebenen Untersetzungsorganes (7) liegen.

3. Untersetzungsgetriebe nach Anspruch 1, dadurch gekennzeichnet, daß die Momentanschwenkbewegung des Rotors (12) um die Mitte eines der Antriebsorgane (15) des im Eingriff mit den Untersetzungsorganen stehenden Paares erfolgt.

4. Untersetzungsgetriebe nach Anspruch 1, dadurch gekennzeichnet, daß die Momentanschwenkbewegung des Rotors (12) um einen Punkt erfolgt, der auf einem Rotorstrahl liegt, welcher die Schwenkmitten der Antriebsorgane (15, 16) des gleichen Paares verbindet.

5. Untersetzungsgetriebe nach Anspruch 3, dadurch gekennzeichnet, daß das Untersetzungsorgan (6), das mit den als Mitten für aufeinanderfolgende Momentanschwenkbewegungen des Rotors dienenden Antriebsorganen zusammenwirkt, festliegt, wogegen das andere Untersetzungsorgan (7) mit dem angetriebenen Organ (5) verbunden ist.

6. Untersetzungsgetriebe nach einem der Ansprüche 1 bis 5, dadurch gekennzeichnet, daß die Anzahl der Antriebselemente (10) des Abstützungs-Untersetzungsorganes (6) gleich ist :

$$N_1 = \frac{V \cdot N_2 \mp n}{N_2 \cdot in} \div X \cdot N_2$$

worin :

V und n ganze Zahlen gleich oder größer 1 sind.

X eine ganze Zahl gleich oder größer 0 ist.

$N_1$ die Anzahl der Antriebselemente des Abstützungs-Untersetzungsorganes ist.

$N_2$ die Anzahl der Antriebselemente des angetriebenen Untersetzungsorganes ist.

$N_2$in die Anzahl der Antriebselemente des angetriebenen Untersetzungsorganes ist, die zwischen zwei Antriebsorganen angeordnet sind, welche zu verschiedenen Paaren eines mit diesem Untersetzungsorgan in Eingriff stehenden Rotors gehören.

Das Zeichen — wird verwendet, wenn die Motorwelle (1) in der gleichen Richtung dreht wie das angetriebene Untersetzungsorgan und das Zeichen +, wenn sie gegensinnig drehen.

7. Untersetzungsgetriebe nach einem der Ansprüche 1 bis 5, dadurch gekennzeichnet, daß die Anzahl der Antriebselemente des angetriebenen Untersetzungsorganes gleich ist :

$$N_2 = \frac{Y \cdot N_1 \pm n}{N_1 \cdot in} + Z \cdot N_1$$

worin :

Y und n ganze Zahlen gleich oder größer 1 sind.

Z eine ganze Zahl gleich oder größer 0 ist.

$N_1$ die Anzahl der Antriebselemente des Abstützungs-Untersetzungsorganes ist.

$N_2$ die Anzahl der Antriebselemente des angetriebenen Untersetzungsorganes ist.

$N_2$in die Anzahl der Antriebselemente des angetriebenen Untersetzungsorganes ist, die zwischen zwei Antriebsorganen angeordnet sind, welche zu unterschiedlichen Paaren eines mit diesem Untersetzungsorgan in Eingriff stehenden Rotors gehören.

Das Zeichen + wird verwendet, wenn die Motorwelle (1) im gleichen Sinn wie das angetriebene Untersetzungsorgan dreht, und das Zeichen —, wenn sie gegensinnig drehen.

8. Untersetzungsgetriebe nach Anspruch 6 oder 7, dadurch gekennzeichnet, daß das Untersetzungsverhältnis gleich ist :

$$R = \frac{N_1 \cdot N_2 in}{n}$$

9. Untersetzungsgetriebe nach einem der vorhergehenden Ansprüche, dadurch gekennzeichnet, daß beide Untersetzungsorgane beweglich und untereinander durch eine vom Rotor unabhängige Kinematik verbunden sind.

10. Untersetzungsgetriebe nach einem der Ansprüche 1 bis 9, dadurch gekennzeichnet, daß es zwei Rotoren aufweist, wobei die Paare von Antriebsorganen der Rotoren ineinandergeschachtelt sind, und daß die Anzahl der Antriebselemente zumindest eines Untersetzungsorganes verdoppelt ist.

11. Untersetzungsgetriebe nach einem der Ansprüche 1 bis 10, dadurch gekennzeichnet, daß zwei benachbarte Paare von Antriebsorganen eines Rotors untereinander durch eine Vorrichtung verbunden sind, die eine Winkelversetzung der Position dieser Paare relativ zueinander ermöglicht.

12. Untersetzungsgetriebe nach einem der Ansprüche 1 bis 9, dadurch gekennzeichnet, daß es einen einzigen Rotor aufweist und daß die Anzahl der Antriebselemente zumindest eines Untersetzungsorganes ungerade ist.

13. Untersetzungsgetriebe nach Anspruch 1 oder 12, dadurch gekennzeichnet, daß die Antriebselemente des Abstützungs-Untersetzungsorganes und des angetriebenen Untersetzungsorganes in einer Ebene senkrecht zur Motorwelle (1) angeordnet sind, welche auf ein und derselben Seite des Rotors liegt, wobei die Antriebsorgane dieses Rotors sich über eine der Seiten desselben senkrecht hinauserstrecken (Fig. 1).

14. Untersetzungsgetriebe nach Anspruch 1 oder Anspruch 12, dadurch gekennzeichnet, daß die Antriebselemente des Abstützungs-Untersetzungsorganes und des angetriebenen Untersetzungsorganes in Ebenen senkrecht zur Motorwellenachse (1) angeordnet sind, die zu beiden Seiten des Rotors liegen, wobei die Antriebsorgane jedes Paares des Rotors sich über die gegenüberliegenden Seiten dieses Rotors hinauserstrecken (Fig. 26).

15. Untersetzungsgetriebe nach Anspruch 6 oder 7, dadurch gekennzeichnet, daß $N_1$in oder $N_2$in gleich oder größer 2 ist.

16. Untersetzungsgetriebe nach einem der Ansprüche 1 bis 9 oder 12 bis 14, dadurch gekennzeichnet, daß der Rotor von der Motorwelle (1) über einen Exzenter (13) angetrieben ist.

17. Untersetzungsgetriebe nach Anspruch 10, dadurch gekennzeichnet, daß die beiden Rotoren von der Motorwelle (1) über ein und desselben Exzenter oder über zwei zueinander konzentrische Exzenter angetrieben sind.

18. Untersetzungsgetriebe nach Anspruch 10, dadurch gekennzeichnet, daß jeder Rotor von der Motorwelle (1) über einen Exzenter angetrieben ist.

19. Untersetzungsgetriebe nach Anspruch 18, dadurch gekennzeichnet, daß die Exzenter entgegengesetzt angeordnet sind.

20. Untersetzungsgetriebe nach einem der Ansprüche 1 bis 9, dadurch gekennzeichnet, daß es mehrere Rotoren aufweist, die je durch einen Exzenter angetrieben sind, der mit der Motorwelle (1) verbunden ist, und daß die Exzenter um die Motorwelle gleichmäßig verteilt sind.

21. Untersetzungsgetriebe nach einem der vorhergehenden Ansprüche, dadurch gekennzeichnet, daß die Untersetzungsorgane durch zwei zylindrische konzentrische Elemente (55, 61) gebildet sind, welche den oder die Rotoren (68, 69) umgeben, und daß die Antriebselemente dieser Untersetzungsorgane durch Bohrungen (55, 57 ; 64, 65) gebildet sind.

22. Untersetzungsgetriebe nach Anspruch 21, dadurch gekennzeichnet, daß die Bohrungen kreisförmig sind und daß der Durchmesser der Bohrungen (64, 65) des inneren Untersetzungsorganes größer als jener der Bohrungen (56, 57) des äußeren Untersetzungsorganes ist.

23. Untersetzungsgetriebe nach Anspruch 22, dadurch gekennzeichnet, daß jedes Paar von Antriebsorganen zwei koaxiale Ansätze (72, 73) aufweist, deren Durchmesser den Durchmessern der Bohrungen der entsprechenden Untersetzungsorgane entsprechen.

24. Untersetzungsgetriebe nach Anspruch 23, dadurch gekennzeichnet, daß die Ansätze (72, 73) eine kugelige Oberfläche in Form eines Kugelabschnittes aufweisen.

25. Untersetzungsgetriebe nach Anspruch 17, dadurch gekennzeichnet, daß die Rotoren (12, 40) im wesentlichen in der gleichen Ebene angeordnet sind und daß das angetriebene Untersetzungsorgan (7) eine erste Reihe von Antriebselementen aufweist, die mit den zugeordneten Antriebsorganen eines Rotors zusammenwirken, sowie eine zweite Reihe von Antriebselementen, die mit den zugeordneten Antriebsorganen des anderen Rotors zusammenwirken, während das Abstützungs-Untersetzungsorgan (6) eine einzige Reihe von Antriebselementen aufweist, die mit den entsprechenden Antriebsorganen der beiden Rotoren (12, 40) zusammenwirken.

26. Untersetzungsgetriebe nach einem der Ansprüche 18 bis 20, dadurch gekennzeichnet, daß die Rotoren in parallelen Ebenen angeordnet sind und daß die Antriebsorgane jedes Rotors mit den zugeordneten Antriebselementen jedes Untersetzungsorganes zusammenwirken (Fig. 27).

**0 155 497**

Fig. 3
Fig. 4
Fig. 5
Fig. 6
Fig. 7
Fig. 8
Fig. 9
Fig. 2
Fig. 1
Fig. 26

0 155 497

Fig.10 Fig.11 Fig.12
Fig.13 Fig.14 Fig.15
Fig.16 Fig.17 Fig.18
Fig.19 Fig.20

0 155 497

Fig. 22

Fig. 23

Fig. 25

Fig. 24

Fig. 21

3

Fig. 27

Fig. 29

Fig. 28